# EUROPÄISCHE PATENTANMELDUNG

(11) **EP 4 765 590 A1**
(43) Veröffentlichungstag der Anmeldung: **24.06.2026**
(21) Anmeldenummer: 24222040.8
(22) Anmeldetag: 20.12.2024
(51) Int. Cl.: H02K 3/50, H02K 3/52, H02K 11/33

(54) **HOCHSTROMVERBINDUNGEN ZU EINER DYNAMOELEKTRISCHEN MASCHINE**

(71) Anmelder: Innomotics GmbH, 90441 Nürnberg (DE)
(72) Erfinder: Brütting, Frank, 91054 Erlangen (DE)
(74) Vertreter: Michalski Hüttermann & Partner mbB

(57) **Zusammenfassung**

Die Erfindung betrifft eine rotatorische dynamoelektrische Maschine (1) mit
- einem Stator (2), der als hohlzylindrischer magnetisch leitfähiger Körper mit einer Statorbohrung (26) aufgebaut ist, und der ein aus Leiterstäben (4) in Nuten (3) des magnetisch leitfähigen Körpers gebildetes, im Bereich der Innenmantels der Statorbohrung (26) angeordnetes Wicklungssystem aufweist,
- einem Rotor (31), der in der Statorbohrung (26) angeordnet ist, wobei Stator (2) und Rotor (31) durch einen Luftspalt (30) voneinander getrennt sind,
- wobei die auf einer Stirnseite des magnetisch leitfähigen Körpers des Stators (2) aus jeweils einer Nut (3) ragenden erste Enden der Leiterstäbe (4) jeweils mit zumindest einer Sammelschiene (5) niederohmig elektrisch kontaktiert sind,
- wobei die Sammelschiene (5) mindestens einen Kontaktnocken (9) aufweist, um mittels eines Kontaktierungsmittels eine elektrische Kontaktierung zwischen dem Kontaktnocken (9) und einem dazugehörigen Wechselrichtermodul (6) zu schaffen,
- wobei die zweiten Enden der Leiterstäbe (4) an der anderen Stirnseite des magnetisch leitfähigen Körpers des Stators (2) zu einem Kurzschlussring zusammengefasst sind.

## Beschreibung

Die Erfindung betrifft eine dynamoelektrische Maschine, deren Wicklungssystem Leiterstäben aufweist, die jeweils mit Wechselrichtermodulen elektrisch kontaktiert sind.

Wicklungssysteme, also Drähte oder Leiterstäbe in Nuten eines Stators einer dynamoelektrischen Maschine werden über elektrische Kontaktierungen, wie Lötverbindungen oder CrimpVerbindungen, vorzugsweise über einen Klemmenkasten mit dem elektrischen Netz oder Ausgängen eines Umrichters verbunden.

Dieses Stator-Wicklungssystem besteht üblicherweise aus gewickelten Spulen mit Einzeldraht, Litzenleitern oder Leiterstäben, die dann zu einem elektrischen Wicklungssystem verbunden werden.

Bei vergleichsweise leistungsstarken dynamoelektrischen Maschinen (>500kW) versorgen externe Umrichter (z.B. großer Schaltschrank in einem getrennten Raum) diese Maschine mit vergleichsweise niedrigem Strom und verhältnismäßig hoher Spannung mittels steifer, dicker und isolierter Leitungen.

Aufgrund des dort üblichen hohen Spannungs-Niveaus zur Leistungsübertragung zwischen Umrichter und Maschine ist es dabei notwendig eine dementsprechende Isolation vorzusehen.

Für die dabei zu übertragenden Ströme werden zur Kontaktierung die genannten Verbindungstechniken, wie Crimp-Hülsen oder Lötverbindungen vorgesehen.

Bei einem integrierten Antriebssystem mit Stabwicklung WO 2020/200590 A1 ist das Wicklungssystem der Maschine nicht aus einer verteilten dreiphasigen Wicklung mittels Kabel oder Drähten aufgebaut, sondern aus einer hohen, der Nutzahl des Stators entsprechenden Anzahl, starrer und gerader Leiterstäbe. Diese Stäbe sind auf einer Stirnseite des Stators über einen Kurzschlussring miteinander verbunden, und auf der anderen Stirnseite des Stators Rückseite der Maschine durch jeweils zu einem Leiterstab gehörige Wechselrichtermodule einzeln gespeist. Dieses Wicklungssystem stellt sich somit quasi als ein einseitig offener Käfigläufer dar, das auch als Statorkäfigwicklung bezeichnet werden kann.

Dieses Wicklungssystem wird mit einer im Verhältnis zur Leistung extrem niedrigen Spannung, z.B. 24 V / 75 V / 150 V / 300 V, und einem extrem hohen Strom im ein- bis zweistelligen Kiloampère-Bereich aus den vielen Teilwechselrichtern bzw. Wechselrichtermodulen versorgt. Sowohl die Erzeugung wie auch die Führung dieser Ströme gestaltet sich sehr komplex und umständlich.

Aufgrund der hohen Wicklungsströme müssen die einzelnen Phasen zwischen Wechselrichter und Motor mit querschnittsstarken Kupferstäben oder -schienen ausgestaltet werden, da diese etwa 2-3 kA Betriebsstrom führen müssen. Diese elektrische Verbindung ist nicht nur mechanisch anspruchsvoll, da es keine geeigneten Steckverbinder gibt und alles verschraubt werden muss, sondern es entstehen auch noch Probleme hinsichtlich zusätzlicher Verluste aufgrund Vielzahl relativ hochohmiger Verbindungen.

Es sind kaskadierte Kontaktierung von axial hintereinander angeordneten Wechselrichtermodulen eines Leiterstabes vorstellbar. Für den Aufbau bedeutet das, dass die aus dem Stator ragenden Leiterstäbe direkt bis zum ersten Wechselrichtermodul und weiteren Wechselrichtermodulen daher Stück für Stück axial an den Stator angebaut werden müssen. Dieser Aufbau führt jedoch zu folgenden Konsequenzen:
Es gibt eine größere Anzahl an hintereinander angeordneten stromführenden Verbindungs-Übergängen. Diese haben ungefähr einen ohmschen Widerstand von jeweils etwa 50 µΩ. Bei 1/2/3 kA Betriebsstrom führen diese Widerstände entsprechend zu 50/200/450 W Verlustleistung pro Übergang, weshalb diese dringend minimiert werden müssen.

Aus der EP 4 277 093 A1 ist für insbesondere versetzt angeordneten Leiterstäbe ein kurbelartiges Zwischenstück erforderlich, das auch einen zusätzlichen Übergangswiderstand erfordert. Zusätzliche axial hintereinander angeordnete Stabsegmente mit den Wechselrichtermodulen führen zu den oben als nachteilig beschriebenen ähnlichen kaskadierten Kontaktierungen. Der innere Stabkreis hat statt dem Kurbelstück ein gerades Aufsatzstück.

Ausgehend davon liegt der Erfindung die Aufgabe eine elektrische Kontaktierung zwischen Umrichtermodulen und einer dynamoelektrischen Maschine vorzusehen, um vergleichsweise hohe Ströme von den Umrichtermodulen nahezu verlustlos bzw. mit möglichst geringen Verlusten in das Wicklungssystem der dynamoelektrischen Maschine zu übertragen.

Die Lösung der gestellten Aufgabe gelingt durch die Merkmalskombination des unabhängigen Anspruchs.

Vorteilhafte Ausgestaltungen sind den abhängigen Ansprüchen zu entnehmen.

Um die Anzahl der verlustbehafteten Kontaktstellen entlang des Hauptstrompfads zu reduzieren und/oder zu vergleichmäßigen, sind alle Umrichtermodule, insbesondere Wechselrichtermodule oder Teilwechselrichter-Platinen vor allem mit ihrer Leistungselektronik an eine aus einem Stück bestehende, also einstückige Sammelschiene angeschlossen, die im Wesentlichen in axialer Verlängerung des jeweiligen Leiterstabes angeordnet ist.

Als Umrichtermodule sind dabei Wechselrichtermodule zu verstehen, die Leistungselektronik, Kondensatoren, Treiberschaltungen DC-Eingangsstufen, AC-Ausgangsstufen aufweisen.

Bei einer möglichen Ausgestaltung dieser Sammelschiene weist diese Sammelschiene - wie eine Art Nockenwelle - im Wesentlichen senkrecht zur Sammelschiene weisende Kontaktnocken auf. Diese Kontaktnocken sind als deutlich größere Plateaus ausgeführt. Auf diese Plateaus werden dann die Leistungselektronik der Wechselrichtermodule elektrisch kontaktiert. Als Kontaktierungsmittel von Kontaktnocken und Wechselrichtermodule sind beispielsweise Verschraubungen und/oder Verpressungen und/oder Verspannungen vorgesehen. Dabei ist das Bestreben eine möglich niederohmige Kontaktierung zu schaffen.

Als Kontaktnocken werden erfindungsgemäß Querschnittserweiterung der Sammelschiene mit begrenzter axialer und/oder radialer Ausdehnung bezeichnet. Die Kontaktnocken bilden sozusagen einen Vorsprung der Sammelschiene. Die Kontaktnocken sind somit exzentrisch zur Sammelschiene angeordnet. Diese Kontaktnocken können auch als gerundeter exzentrischer Vorsprung der Sammelschienen betrachtet werden. Dies Kontaktnocken sind einstückig mit der Sammelschiene gefertigt, indem sie gegossen, geschmiedet oder spanend hergestellt wurden. Die Sammelschiene mit ihren Kontaktnocken ist vorzugsweise aus Kupfer oder einem anderen Material mit geringem ohmschen Widerstand.

Da für den erfindungsgemäßen Aufbau der dynamoelektrischen Maschine vergleichsweise hohe Ströme erforderlich sind, speisen mehrere Leistungselektronik-Module auf eine Sammelschiene und damit auf einen Leiterstab. Dabei sind mehrere Leistungsmodul-Scheiben für einen Stab einer Nut axial hintereinander angeordnet, wobei die Ausgänge der Wechselrichtermodule über ihre Kontaktnocken auf die axial verlaufende Sammelschiene parallelgeschaltet werden und damit gemeinsam einen Leiterstab speisen.

Dieser Aufbau bietet den Vorteil, dass die Übergänge von den Kontaktnocken auf die Leistungselektronik der Wechselrichtermodule eine deutlich größere Kontaktfläche aufweisen können, sodass auch diese Übergangswiderstände minimiert werden.

Während bei der kaskadierten, also axial hintereinander angeordneten Verbindungsweise der Umrichtermodule sich jeweils aufsummierte Ströme an der Hauptkontaktstelle zum Leiterstab anliegen und damit die Verluste über Pv = R·I² zum Motor bzw. Leiterstab hin quadratisch zunehmen, liegen bei der erfindungsgemäßen Kontaktierung mit Sammelschiene nur jeweils die einzelnen Teilströme der jeweiligen Leistungselektronik (z.B. 500 A) an den Kontaktstellen der Umrichtermodule zu der Sammelschiene an.

Um diese Sammelschiene mit dem jeweiligen Leiterstab zu verbinden, existiert allerdings noch eine Hauptverbindungsstelle, über die der gesamte Strom der Sammelschiene, der sich aus Teilströmen der jeweiligen Wechselrichtermodulen zusammensetzt, zum Leiterstab fließen muss. Diese Hauptverbindungsstellen - von der jeweiligen Sammelschiene zum dazugehörigen Leiterstab - bilden in der Zuleitung zum aus Leiterstäben aufgebauten Wicklungssystem im Betrieb der dynamoelektrischen Maschine die Haupt-Verlustleistungsquelle.

Diese elektrische Kontaktierung kann beispielsweise über eine nur schwer lösbare Schweißverbindung oder eine niederohmig gestaltete, lösbare Verschraubung erfolgen.

Vorteilhafterweise können bei dem erfindungsgemäßen Aufbau der dynamoelektrischen Maschine und deren Kontaktierungen ihres Wicklungssystems, die einzelnen Wechselrichtermodule einfach ausgetauscht werden. Dabei werden lediglich die Kontaktierungen der einzelnen Wechselrichtermodule zu ihren Kontaktnocken buw. Sammelschiene gelöst.

Die in der Nut befindlichen Leiterstäbe des Stators sind rechteckförmig gestaltet. Dabei bietet der erfindungsgemäße Aufbau die Möglichkeit auch die Sammelschiene rechteckförmig zu gestalten, wobei sich damit eine wesentlich größeren Auflagefläche zur Kontaktierung von Sammelschiene zum Leiterstab - also der Hauptverbindungsstelle - ergibt, was auch dort den Übergangswiderstand reduziert.

Zum einen ist es grundsätzlich vorteilhaft, wenn die "Hauptschiene" der Sammelschienen nicht wie rund wie eine Nockenwelle, sondern rechteckig wie eine Stromschiene sind und dabei auch noch radial nach außen gerichtet orientiert sind.

Die rechteckige Form vereinfacht die Herstellung und ermöglicht einen größeren Querschnitt. In Kombination mit der den Motorstäben angepassten Orientierung ermöglicht die Rechteckform außerdem eine direkte Verschraubung mit den ebenfalls rechteckigen Wicklungsstäben des Motors.

Aufgrund der vergleichsweise niederohmigen Kontaktierung der Leistungselektronik über die Kontaktnocken zu ihrer jeweiligen Sammelschiene, kann die Kühlung der Hauptverbindungstelle forciert werden und ggf. einem konzentrierten Kühlluftstrom ausgesetzt sein.

Vorteilhafterweise sind an einer Kontaktnocke bis zu zwei Wechselrichtermodulen kontaktiert. Pro Kontaktnocke ist eine Kühlscheibe vorgesehen, so dass sich beispielsweise zwischen zwei Wechselrichtermodulen an einer Kontaktnocke je eine Kühlscheibe zur Entwärmung der Wechselrichtermodule befindet. Die Kontaktnocken liegen zweckmäßigerweise in der gleichen Ebene wie die Kühlscheibe. Damit ist eine beidseitige Entwärmung, wie auch eine beidseitige Kontaktierung der Leistungselektronik der Wechselrichtermodule an die Kontaktnocken möglich.

Falls die Platinen der Leistungselektronik der Wechselrichtermodule für die Kontaktierung nicht radial über die Kühlscheibe hinausragen, benötigen die Kühlscheiben eine Aussparung, in die die Kontaktnocken hineinragen.

Die rotatorische dynamoelektrische Maschine weist somit einen Stator auf, mit einem in Nuten eines magnetisch leitfähigen Körpers angeordneten Wicklungssystem, der vorzugsweise als Blechpaket ausgeführt ist. Das Wicklungssystem des Stators weist pro Nut einen Leiterstab auf, der über Sammelschiene einem oder mehreren Wechselrichtermodulen ermöglicht auf diesen Leiterstab einzuspeisen.

Pro Nut ist also ein Leiterstab vorgesehen, der mit der Sammelschiene kontaktiert ist, wobei über die Kontaktnocken der Sammelschiene jeweils zumindest ein Wechselrichtermodul auf die Sammelschiene und damit auf diesen Leiterstab einspeist.

Pro Nut kann ebenso ein Leiterstab in mehrere Teilleiter unterteilt sein, so dass entweder eine oder mehrere Sammelschienen pro Nut vorhanden sind. Dabei wird über die Kontaktnocken der Sammelschiene entweder auf alle Teilleiter eines Leiterstabes dieser Nut gemeinsam eingespeist oder jeder Teilleiter oder Teilleiterbündel eines Leiterstabes weist eine eigene Sammelschiene auf, auf die die jeweiligen Wechselrichtermodule über ihre Kontaktnocken einspeisen. Damit kann die Sammelschiene, zumindest für kurze Abschnitte geschichtet ausgeführt sein.

Die axiale Anordnung der Kontaktnocken auf der Sammelschiene kann äquidistant oder auch mit unterschiedlichen Abständen ausgeführt sein. Unterschiedliche Abstände der Kontaktnocken auf einer Sammelschiene können dann sinnvoll sein, falls unterschiedliche Leistungen der Wechselrichtermodule und/oder größer dimensionierte Kühlscheiben angebracht werden müssen.

An der anderen Stirnseite des Stators, also den zweiten Enden der Leiterstäbe, sind diese jeweils aus der Nut ragenden Leiterstäbe zu einem Kurzschlussring zusammengefasst, also miteinander über den Kurzschlussring elektrisch kontaktiert.

Dies erfolgt frühestens dann, wenn alle Leiterstäbe axial in ihre jeweiligen Nuten eingesetzt worden sind.

Der Rotor weist ebenfalls einen magnetisch leitfähigen Körper auf, der vorzugsweise als Blechpaket ausgeführt ist. Der Rotor kann dabei als Asynchronläufer mit Kurzschlusskäfig oder Wicklungssystem ausgeführt sein. Der Rotor kann ebenso Permanentmagnete aufweisen oder als Synchronläufer mit Wicklungssystem ausgeführt sein.

Stator und Rotor sind durch einen Luftspalt voneinander getrennt, wobei der Rotor in einer Statorbohrung angeordnet ist. Die auf einer Stirnseite des magnetisch leitfähigen Körpers des Stators aus jeweils einer Nut ragenden erste Enden der Leiterstäbe sind jeweils mit mindestens einer Sammelschiene kontaktiert. Dies Kontaktierung ist elektrisch niederohmig ausgeführt.

Prinzipiell sind auch Crimp- und Lötverbindungen für diese hohen Betriebs-Stromstärken der dynamoelektrischen Maschine denkbar. Bei Crimpverbindungen sind allerdings die dazugehörigen Hülsen vergleichsweise groß und die dazu benötigten Werkzeuge ebenfalls, so dass der kompakte Aufbau und/oder Zugang an die jeweilige Kontaktstelle ggf. erschwert werden kann. Bei Lötvorgängen ist die Festigkeit der Kontaktverbindung und der Zugang zur Lötstelle zu gewährleisten.

Über die Sammelschiene speisen die Wechselrichtermodule den Betriebsstrom in den jeweiligen Leiterstab einer Nut des Stators.

Diese Hochstromverbindung zwischen dem ersten Ende des Leiterstabes und seiner Sammelschiene kann vor dem axialen Einschieben in die Nut des Stators vormontiert und verschweißt werden. Eine Kontaktierung der Wechselrichtermodule an die Sammelschiene erfolgt vorteilhafterweise erst, wenn der Leiterstab mit seinem Anschlusselement im magnetisch leitfähigen Körper, insbesondere dem Blechpaket des Stators, positioniert ist - kann aber auch vorher erfolgen.

Der Übergangswiderstand bzw. Kontaktwiderstand der Hauptverbindungsstelle zwischen der Sammelschiene und dem ersten Ende des Leiterstabes wird dabei vergleichsweise gering und die Hauptverbindungsstelle wird kompakt ausgeführt, so dass auch bei einer Vielzahl von Verbindungsstellen an einer Stirnseite der dynamoelektrischen Maschine ein kompakter Aufbau mit den Wechselrichtermodulen vorhanden ist, die jeweils parallel auf ihre Sammelschiene einspeisen.

Diese dynamoelektrische rotatorische Maschine mit ihrem an Umrichtermodule kontaktierten Wicklungssystem, das pro Nut einzelne Leiterstäbe aufweist sind somit bei vergleichsweise niedrigen Spannungen (<100V) und hohen Stromstärken (>1000A) u.a. ein verlustoptimierter Betrieb der dynamoelektrischen rotatorischen Maschine bei Industrie- und Mobilitätsanwendungen (Marine, Bahnverkehr, etc.) möglich.

Durch das spezielle Wicklungssystem des Stators werden Leiterstäbe, insbesondere Kupferstäbe - ausgeführt als Massivleiter oder als geteilter Leiter - verwendet, so dass Spulen mit einer Windungszahl 0,5 entstehen. Damit entfallen die an sich bekannten klassischen, axial sehr ausladenden Wickelköpfe an den Stirnseiten der magnetisch leitfähigen Körper bzw. Blechpaketen. Damit reduziert sich die axiale Ausladung des Stators und die dynamoelektrische Maschine bzw. der gesamte Antrieb kann damit kompakt ausgeführt werden.

Somit ist die Leistungselektronik der Wechselrichtermodule erfindungsgemäß über einen oder mehrere Kontaktnocken der Sammelschiene an einen Leiterstab vergleichsweise niederohmig elektrisch kontaktiert. Damit können vergleichsweise hohe Ströme nahezu verlustfrei in das Wicklungssystem der dynamoelektrischen Maschine übertragen werden. Durch diese gesamte Kontaktierung zu einem Leiterstab, also Leistungselektronik der Wechselrichtermodule auf Kontaktnocken der Sammelschiene und Sammelschiene auf Leiterstab ergibt sich zusätzlich ein raumökonomischer kompakter Aufbau, der erfindungsgemäß eine geringe Verlustleistung seiner Kontaktstellen aufweist.

Durch diese erfindungsgemäße Kontaktierung der Wechselrichtermodule mit ihren Leistungshalbleiter und deren Kontaktstellen über die Kontaktflächen der Kontaktnocken der jeweiligen Sammelschiene zu den jeweiligen Leiterstäben stellen sich folgende Vorteile ein: Aufgrund der reduzierten Anzahl von Kontaktstellen und (teils deutlich) vergrößerter Kontaktflächen tritt eine deutlich verringerte Verlustleistung entlang der Sammelschienen 5 bis zum jeweiligen Leiterstab ein. Die Herstellung der oben genannten Kontaktierung wird durch den einfacheren Aufbau der Sammelschienen 5, aufgrund der geringen Anzahl der Einzelteile vereinfacht. Eine leichtere und schnellere Wartung der Wechselrichterscheiben und/oder Wechselrichtermodule ist möglich, insbesondere wenn Anpressbacken zur Kontaktierung verwendet werden. Im Vergleich zu den bisherigen kaskadierten "Abstandsbolzen-artigen" Sammelstäben kann das Wechselrichtermodul 6 als Ganzes von der dynamoelektrischen Maschine abgekoppelt werden, um die Wartung durchzuführen.

Die Erfindung sowie weitere vorteilhafte Ausgestaltungen der Erfindung werden anhand prinzipiell dargestellter Ausführungsbeispiele näher erläutert, darin zeigen:
- FIG 1: perspektivische Darstellung eines prinzipiell dargestellten Stators,
- FIG 2: Seitenansicht von umfänglich angeordneten Wechselrichtermodulen,
- FIG 3: prinzipielle Darstellung einer Sammelschiene mit Kontaktnocken,
- FIG 4: Längsschnitt einer Kontaktierung mit Nockenwelle,
- FIG 5 bis 14: Kontaktierungsmöglichkeiten an Sammelschienen.

Es sei angemerkt, dass sich Begriffe wie "axial", "radial", "tangential" etc. auf die in der jeweiligen Figur bzw. im jeweils beschriebenen Beispiel zum Einsatz kommende Achse 10 beziehen. Mit anderen Worten beziehen sich die Richtungen axial, radial, tangential stets auf eine Achse 10 des Rotors 31 und damit auf die entsprechende Symmetrieachse des Stators 2. Dabei beschreibt "axial" eine Richtung parallel zur Achse 10, "radial" beschreibt eine Richtung orthogonal zur Achse 10, auf diese zu oder auch von ihr weg, und "tangential" ist eine Richtung, die in konstantem radialem Abstand zur Achse 10 und bei konstanter Axialposition kreisförmig um die Achse 10 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 31 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

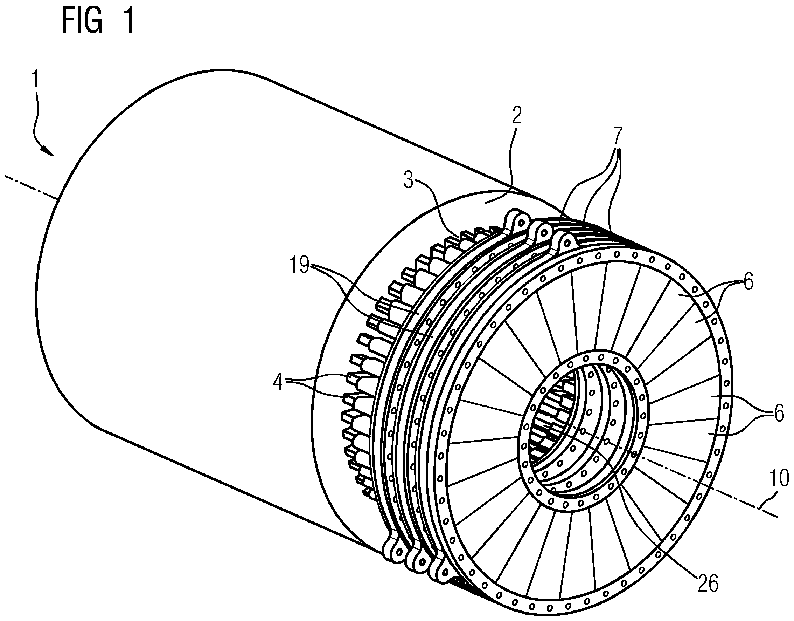

FIG 1 zeigt in perspektivischer Darstellung einen Stator 2 einer dynamoelektrischen Maschine 1, dessen Wicklungssystem in im Wesentlichen axial verlaufenden Nuten 3 angeordneten Leiterstäbe 4 aufweist. Die Nuten 3 verlaufen in einem Blechpaket und sind einer Statorbohrung 26 zugewandt, in der sich im Betrieb der dynamoelektrischen Maschine 1 ein Rotor 31 befindet, der mit dem bestromten Wicklungssystem elektromagnetisch wechselwirkt und so eine Drehung des Rotors 31 um eine Achse 10 generiert.

Axial an eine Stirnseite des Stators 2 schließt sich in unmittelbarer Nähe eine Anordnung von Wechselrichtermodulen 6 an.

Diese Wechselrichtermodule 6 weisen die Leistungselektronik, Kondensatoren, Treiberschaltungen, DC-Eingangsstufen, AC-Ausgangsstufen auf. Des Weiteren weisen die Wechselrichtermodule 6 Kontaktstellen 8 auf mit denen diese Wechselrichtermodule 6 jeweils über Kontaktnocken 9 mit einer Sammelschiene 5 kontaktiert sind.

In einer möglichen Ausgestaltung dieser Sammelschiene 5 sind im Wesentlichen senkrecht zur Sammelschiene 5 weisende Kontaktnocken 9, also eckige oder gerundete, exzentrische Vorsprünge vorgesehen. Diese Kontaktnocken 9 sind als deutlich größere Plateaus oder Nockenflächen 25 ausgeführt. An diese Nockenflächen 25 werden dann die Leistungselektronik der Wechselrichtermodule 6 über ihre Kontaktstellen 8 elektrisch kontaktiert. Als Kontaktierungsmittel von Kontaktnocken 9 und Wechselrichtermodule 6 sind beispielsweise Verschraubungen 12 und/oder Verpressungen 15 und/oder Verspannungen 16 vorgesehen. Dabei ist das Bestreben eine möglich niederohmige Kontaktierung zwischen Wechselrichtermodul 6 und Kontaktnocken 9 über die Kontaktstelle 8 und die Kontaktfläche 25 zu schaffen.

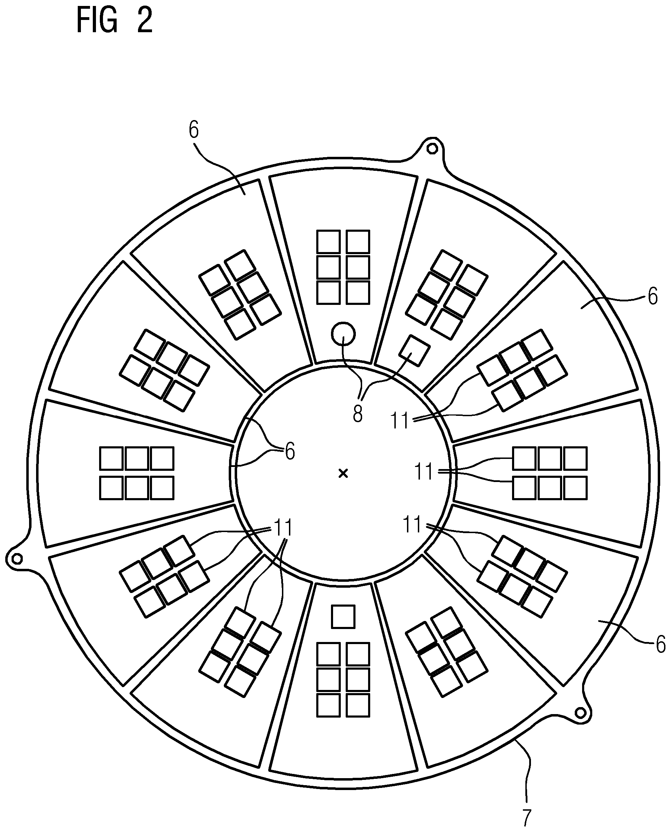

Die Wechselrichtermodule 6 für die "Speisung" unterschiedlicher Sammelschienen 5 und damit unterschiedlicher Leiterstäbe 4 sind dabei in der Seitenansicht gemäß FIG 2 "scheibenähnlich" angeordnet und bilden axial hintereinander angeordnete Wechselrichterscheiben 7. Die Wechselrichtermodule 6 sind dabei in Umfangsrichtung betrachtet voneinander elektrisch isoliert. Axial hintereinander angeordnete Wechselrichtermodule 6 speisen auf eine Sammelschiene 5 und damit auf einen Leiterstab 4. Dabei sind die Wechselrichtermodule 6 einzeln aus der Anordnung herausnehmbar.

Pro Nut 3 ist also ein Leiterstab 4 vorgesehen, der mit der Sammelschiene 5 kontaktiert ist, wobei über die Kontaktnocken 9 der Sammelschiene 5 jeweils zumindest ein Wechselrichtermodul 6 auf die Sammelschiene 5 und damit auf diesen Leiterstab 4 einspeist.

Pro Nut 3 kann ebenso ein Leiterstab 4 in mehrere Teilleiter unterteilt sein, so dass entweder eine oder mehrere Sammelschienen 5 pro Nut vorhanden sind. Dabei wird über die Kontaktnocken 6 der Sammelschiene 5 entweder auf alle Teilleiter eines Leiterstabes 4 dieser Nut 4 gemeinsam eingespeist oder jeder Teilleiter oder Teilleiterbündel eines Leiterstabes 4 weist eine eigene Sammelschiene 5 auf, auf die die jeweiligen Wechselrichtermodule 6 über ihre Kontaktnocken 9 einspeisen.

Um die Anzahl der verlustbehafteten Kontaktstellen entlang des Hauptstrompfads (Leistungselektronik des Wechselrichtermoduls 6, über die Kontaktstelle 8 zum Kontaktnocken 9 der Sammelschiene 5 über die Hauptkontaktstelle 35 zum Leiterstab 4) zu reduzieren und/oder zu vergleichmäßigen, sind alle Umrichtermodule, insbesondere Wechselrichtermodule 6 oder Teilwechselrichter-Platinen vor allem mit ihrer Leistungselektronik an eine aus einem Stück bestehende, also einstückige Sammelschiene 5 angeschlossen, die im Wesentlichen in axialer Verlängerung des jeweiligen Leiterstabes 4 angeordnet ist.

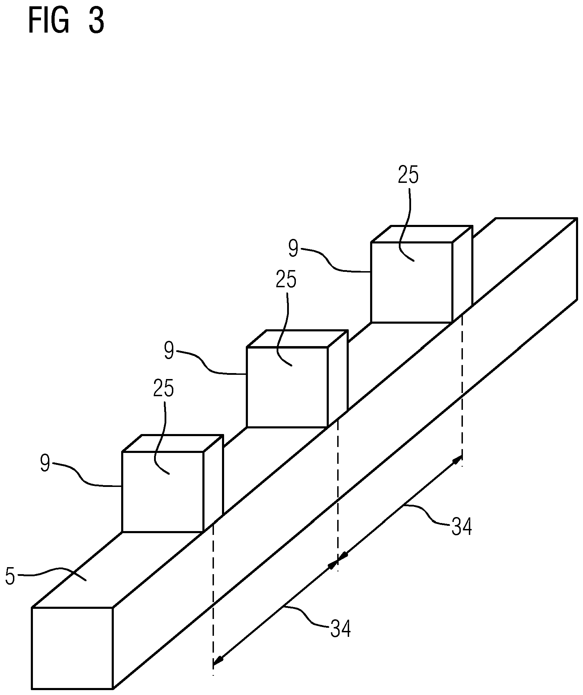

Die Kontaktnocken 9 sind beispielsweise, wie in FIG 3 gezeigt als rechteckige Querschnittserweiterung der Sammelschiene 5 mit begrenzter axialer und/oder radialer Ausdehnung ausgeführt. Die Kontaktnocken 9 bilden sozusagen zumindest einen Vorsprung der Sammelschiene 5. Die Kontaktnocken 9 sind somit exzentrisch zur Sammelschiene 5 angeordnet. Andere Ausbildungen der Kontaktflächen 25 (rundlich, elliptisch etc.) sind durchaus möglich.

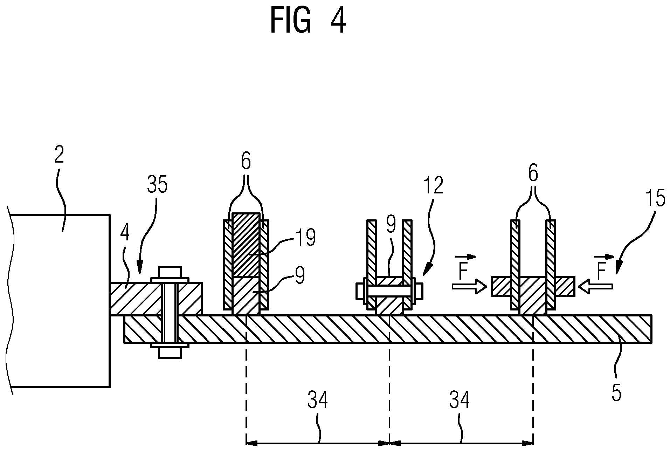

Da für den erfindungsgemäßen Aufbau und die Funktion dieser dynamoelektrischen Maschine 1 vergleichsweise hohe Ströme erforderlich sind, speisen mehrere Leistungselektronik-Module auf eine Sammelschiene 5 und damit auf einen Leiterstab (FIG 4). Dabei sind mehrere Wechselrichtermodule 6 für einen Leiterstab 4 einer Nut 3 axial hintereinander angeordnet, wobei die Ausgänge der Wechselrichtermodule 6 über ihre Kontaktstellen 8 und die Kontaktflächen 25 der Kontaktnocken 9 auf die axial verlaufende Sammelschiene 5 parallelgeschaltet sind und damit gemeinsam einen Leiterstab 4 speisen. Zwischen zwei an einem Kontaktnocken 9 kontaktierten Wechselrichtermodulen 6 ist erfindungsgemäß eine Kühlscheibe 19 vorgesehen, die die Abwärme aus dem Wechselrichtermodul 6 und/oder der Übergangstelle von Kontaktstelle 8 zu Kontaktnocken 9 abführt.

Dieser Aufbau bietet den Vorteil, dass die Übergänge von den Kontaktnocken 9 auf die Leistungselektronik der Wechselrichtermodule 6 eine deutlich größere Kontaktfläche 25 aufweisen, sodass auch diese Übergangswiderstände minimiert werden.

Während bei der kaskadierten, also axial hintereinander angeordneten Verbindungsweise der Umrichtermodule sich jeweils aufsummierte Ströme an der Hauptkontaktstelle 35 zum Leiterstab 4 anliegen und damit die Verluste über Pv = R·I² zum Motor bzw. Leiterstab 4 hin quadratisch zunehmen, liegen bei der erfindungsgemäßen Kontaktierung mit Sammelschiene 5 nurjeweils die einzelnen Teilströme des jeweiligen Wechselrichtermoduls 6 mit der seiner Leistungselektronik (z.B. 500 A) an den Kontaktstellen der Umrichtermodule zu der Sammelschiene 5 an.

Um diese Sammelschiene 5 mit dem jeweiligen ersten Ende des Leiterstab 4 zu verbinden, existiert allerdings noch eine Hauptkontaktstelle 35, über die der gesamte Strom der Sammelschiene 5, der sich aus Teilströmen der jeweiligen Wechselrichtermodulen 6 dieser Sammelschiene 5 zusammensetzt, zum Leiterstab 4 fließen muss. Diese Hauptkontaktstellen 35 - von der jeweiligen Sammelschiene 5 zum dazugehörigen Leiterstab 4 - bilden in der Zuleitung zum aus Leiterstäben 4 aufgebauten Wicklungssystem im Betrieb der dynamoelektrischen Maschine 1 die Haupt-Verlustleistungsquelle.

Diese elektrische Kontaktierung kann beispielsweise, um niederohmig ausgeführt zu werden, über eine nur schwer lösbare Schweißverbindung oder eine niederohmig gestaltete, lösbare Verschraubung 36 erfolgen.

Vorteilhafterweise können bei dem erfindungsgemäßen Aufbau der dynamoelektrischen Maschine 1 und deren Kontaktierungen ihres Wicklungssystems, die einzelnen Wechselrichtermodule 6 einfach ausgetauscht werden. Dabei werden lediglich die Kontaktierungen der einzelnen Wechselrichtermodule 6 zu ihren Kontaktnocken 9 bzw. Sammelschiene 5 gelöst.

Die in der Nut 3 des Stators 2 befindlichen Leiterstäbe 4 sind rechteckförmig gestaltet. Dabei bietet der erfindungsgemäße Aufbau nunmehr die Möglichkeit auch die Sammelschiene 5 rechteckförmig zu gestalten, wobei sich damit eine wesentlich größeren Auflagefläche zur Kontaktierung von Sammelschiene 5 zum Leiterstab 4 - also der Hauptkontaktstelle 35 - ergibt, was auch dort den Übergangswiderstand reduziert.

Aufgrund der vergleichsweise niederohmigen Kontaktierung der Leistungselektronik der Wechselrichtermodule 6 über die Kontaktnocken 9 zu ihrer jeweiligen Sammelschiene 5, kann die Kühlung der Hauptkontaktstelle 35 forciert werden und ggf. einem konzentrierten Kühlluftstrom ausgesetzt sein.

Vorteilhafterweise sind an einer einseitigen Kontaktnocke 9 bis zu zwei Wechselrichtermodulen kontaktiert. Pro Kontaktnocke 9 ist eine Kühlscheibe 19 vorgesehen, so dass sich beispielsweise zwischen zwei Wechselrichtermodulen 6 an einer Kontaktnocke 9 je eine Kühlscheibe 19 zur Entwärmung der Wechselrichtermodule 6 befindet. Die Kontaktnocken 9 liegen zweckmäßigerweise in der gleichen Ebene liegen wie die Kühlscheibe 19. Damit ist eine beidseitige Entwärmung, wie auch eine beidseitige Kontaktierung der Leistungselektronik der Wechselrichtermodule 6 an die Kontaktnocken 9 möglich.

Falls die Platinen der Leistungselektronik der Wechselrichtermodule 6 für die Kontaktierung nicht radial über die Kühlscheibe 19 hinausragen, benötigen die Kühlscheiben 19 eine Aussparung, in die die Kontaktnocken 9 hineinragen.

Die axiale Anordnung der Kontaktnocken 9 auf der Sammelschiene 5 kann äquidistant oder auch mit unterschiedlichen Abständen 34 ausgeführt sein. Unterschiedliche Abstände der Kontaktnocken 9 auf einer Sammelschiene 5 können dann sinnvoll sein, falls unterschiedliche Leistungen der Wechselrichtermodule 6 und/oder größer dimensionierte Kühlscheiben 19 angebracht werden müssen.

An der anderen Stirnseite des Stators 2, also den zweiten Enden der Leiterstäbe 4, sind diese jeweils aus der Nut 3 ragenden Leiterstäbe 4 zu einem Kurzschlussring zusammengefasst, also miteinander über den Kurzschlussring elektrisch kontaktiert.

Diese Kontaktierung der zweiten Enden der Leiterstäbe 4 zum Kurzschlussring des Stators 2 erfolgt frühestens dann, wenn alle Leiterstäbe 4 axial in ihre jeweiligen Nuten 3 eingesetzt worden sind.

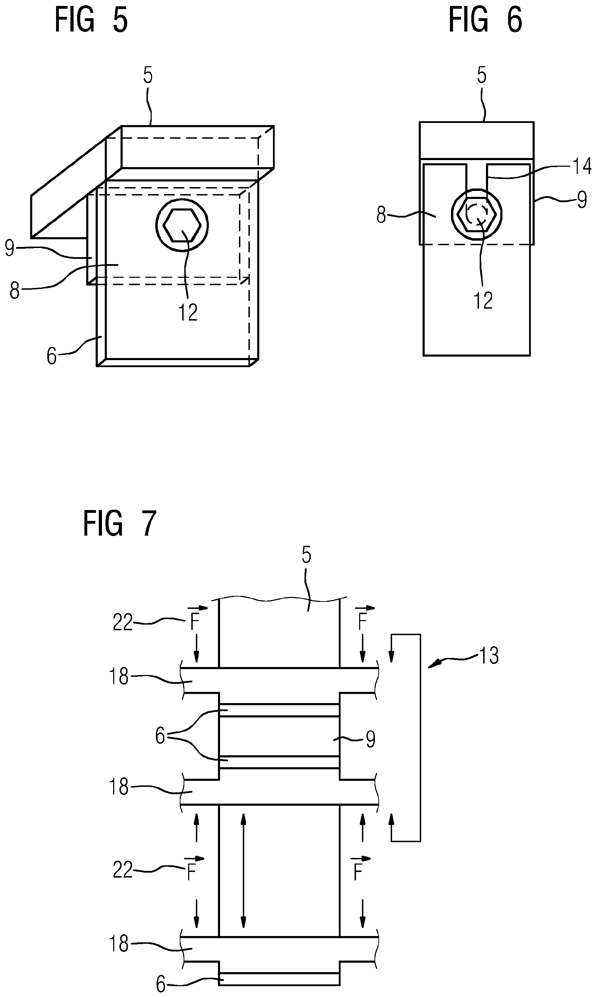

FIG 5 bis 14 zeigen mehrere Möglichkeiten, wie die Kontaktierung zwischen Leistungselektronik-Platine des Wechselrichtermoduls 6 und den Kontaktnocken 9 der Sammelschiene 5 umgesetzt ist.

Dies könnte üblicherweise durch eine Verschraubung 12 (FIG 5) erfolgen, wobei hier ein Schlitz 14, gemäß FIG 6 der Platine des Wechselrichtermoduls 6 vorteilhaft wäre, da damit die Platine in die Verschraubung 12 eingeschoben werden kann, ohne dass z.B. die gesamte Verschraubung 12 gelöst werden muss.

Andererseits sind auch flächige Federkontakte möglich, diese müssen aber den erforderliche Anpressdruck aufweisen, um den Kontaktübergangswiderstand von der Kontaktstelle 8 des Wechselrichtermoduls 6 auf den Kontaktnocken 9 zu minimieren.

Um den Montageaufwand und die Kontaktierung zwischen Wechselrichtermodul 6, insbesondere dem Ausgang der Leistungselektronik des Wechselrichtermoduls 6 über die Kontaktstelle 8 und dem Kontaktnocken 9 der Sammelschiene 5 weiter zu verbessern, eignet sich eine Verpressung 15 der Kontaktstelle 8 des Wechselrichtermoduls 6 an die Kontaktnocken 9. Damit können aufwändige Schraubverbindungen 12 entfallen.

Diese Pressung 15 kann über einen Federkontakt oder z.B. Anpressbacken 18 geschehen. Um die Kontaktflächen 8 der Leistungselektronik-Platinen gegen die Kontaktnocken 9 zu pressen könnten sind nun mehrere Alternativen gemäß FIG 7 vorstellbar:
Die eine Kontaktnocke 9 umgebenden Anpressbacken 18 werden über einen schraubzwingenähnlichen Mechanismus 13 verpresst - oder die zwischen zwei Kontaktnocken 9 liegenden Anpressbacken 18 werden voneinander unter Ausübung einer dementsprechend gerichteten Kraft 22 gespreizt.

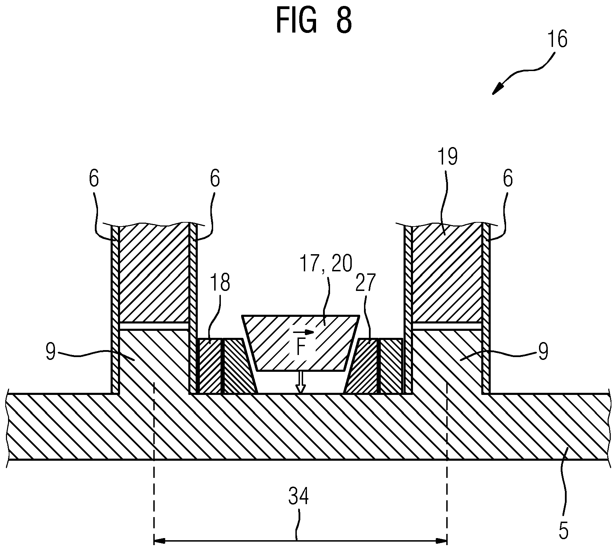

In beiden Fällen erscheint es vorteilhaft, die Anpressbacken 18, wie in FIG 8 angedeutet, auf Ringen 27 aufzubringen, die die ganze Maschine tangential umspannen, also umfänglich ca. auf Höhe der Stirnseite des Stators 2 verlaufen. Damit wären an je einem Ring 27 alle Anpressbacken 18 an dieser Position angebracht. Somit findet eine Kraftübertragung von den Ringen 27 auf die Anpressbacken 18 statt, die wiederum die Kontaktflächen 8 der Leistungselektronik-Platinen der Wechselrichtermodule 6 auf die Kontaktnocken 9 pressen.

Die Anpressbacken 18 müssen dabei gegeneinander isoliert sein, weshalb der Ring 27 zur Vermeidung von Kurzschlüssen z.B. aus hochfestem Kunststoff bestehen sollte, da er sämtliche elektrische Phasen umfänglich umspannt und damit das höchste Risiko eines Kurzschlusses darstellt.

Alternativ könnten auch die Anpressbacken 18 aus elektrisch isolierendem Material bestehen.

Letzteres erscheint einfacher realisierbar, da zwischen den Ringen 27 nur eine Spreizkraft eingebracht werden muss. Diese könnte z.B. wie in untenstehender Abbildung durch angeschrägte Anpressbacken-Ringe 27 und einen radial nach innen wirkenden Keilring 20 aufgebracht werden. Dieser Keilring 20 könnte z.B. mittels Schrauben nach innen - also senkrecht zur Sammelschiene 5 gepresst werden, sodass dieser Keilring 20 wiederum eine Spreizkraft auf die seitlich von ihm liegenden Anpressbacken-Ringe 27 aufbringt.

Andererseits könnte der Keilring 20 auch als C-Ring ausgeführt (also mit einem Schlitz versehen) sein, sodass dieser mit einer schlauchschellenartigen Anordnung, wie eine Schlauchschelle nach innen gepresst/komprimiert werden kann.

Andererseits könnten statt angeschrägten ringförmigen Anpressbacken 18 und einem Keilring 20 auch gerade ringförmige Anpressbacken 18 -Ringe und zwei dazwischen liegende Keilscheiben 33 verbaut werden. Diese Keilscheiben 33 müssten auf den, den Anpressbacken 18 zugewandten Außenseiten plan, und auf den einander zugewandten Innenseiten keilförmig, wie ein Sprengring verlaufen. Dieser sprengring-artige Keilverlauf wird im Folgenden als Ringkeil 32 bezeichnet, während die Scheibe als Ganzes als Keilscheibe 33 bezeichnet wird. Eine Keilscheibe 33 kann mehrere Ringkeile 32 enthalten. Werden diese Keilscheiben 33 gegeneinander verdreht, wird durch die Keilform eine Kraft nach außen gegen die Anpressbacken 18 ausgeübt.

Die Steigung der Ringkeile 32 sollte für eine gute Kombination aus Leichtgängigkeit und starker Kraftausübung möglichst gering ausfallen, sodass das Übersetzungsverhältnis zwischen Tangentialdrehung und Spreizkraft möglichst groß wird. Würden diese Keilscheiben 33 nur aus einem Ringkeil 32 bestehen, ist dies jedoch nachteilig, da der Hub aufgrund der flachen Steigung entsprechend gering ausfällt. Daher müsste man derartige Keilscheiben 33 sehr weit gegeneinander verdrehen, um einen für die Wechselrichtermodulmontage ausreichenden Hub zu erreichen (z.B. eine ausreichende Öffnung des Schlitzes 14, in den das Wechselrichtermodul 6 bzw. die Platine gesteckt werden muss). Wenn die sich gegenüberliegenden Ringkeile 32 jedoch stark gegeneinander verdreht werden, wird der Bereich 23 zwischen den Keilflanken 21 - in denen keine Anpresskraft entsteht - viel zu groß, womit kein gleichmäßiger Druck auf alle zugehörigen Anpressbacken 18 mehr gewährleistet werden kann.

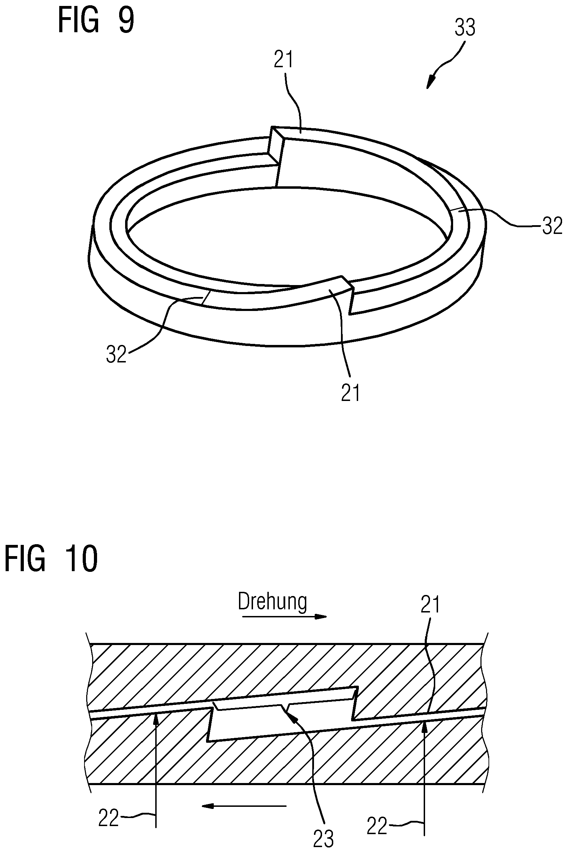

Deshalb ist es vorteilhaft, die Keilscheiben 33 mit zwei um 180° versetzten Ringkeilen 32 gemäß FIG 9 auszuführen. Damit wird bis zu einer Verdrehung um 180° sichergestellt, dass über den gesamten Umfang des Rings mindestens einer der beiden Ringkeile 32 eine Anpresskraft/Spreizkraft 22 ausübt. Zudem sorgen die beiden versetzt zueinander liegenden Ringkeil-Laufflächen für eine automatische Zentrierung der Keilscheiben 33, sodass diese nicht auseinanderrutschen können und daher auch keine Führung benötigen.

Eine andere nicht näher dargestellte Möglichkeit eine Anpresskraft zu erhalten, wäre ein Schraubmechanismus, der aus zwei ineinander liegenden, koaxialen Ringen (oder Hülsen) besteht, die über ein Innen-/Außengewinde miteinander gekoppelt sind (wie der Deckel auf einer Getränkeflasche). Beim Verdrehen der Ringe würde man den inneren Ring dann zu einer Seite aus dem äußeren Ring herausdrehen können, womit diese Ringkombination ebenso eine axiale Spannkraft entwickelt.

Eine weitere Möglichkeit eine Anpresskraft zu erhalten, wäre noch eine pneumatische/hydraulische Lösung, die die Anpressbacken 18 ähnlich einer KFZ-Bremsanlage seitlich aus einem Gehäuse drückt. Dies könnte auch mittels eines Elektromotors, z.B. eines Stellantriebs mit Schneckengetriebe geschehen.

Die bisherigen Ausführungen zeigten Sammelschienen 5 mit einseitig, insbesondere radial nach außen ragenden Kontaktnocken 9. Dabei sind die Wechselrichtermodule 6 bzw. deren Leistungshalbleiterplatinen im Wesentlichen radial auf den Sammelschienen 5 positioniert worden.

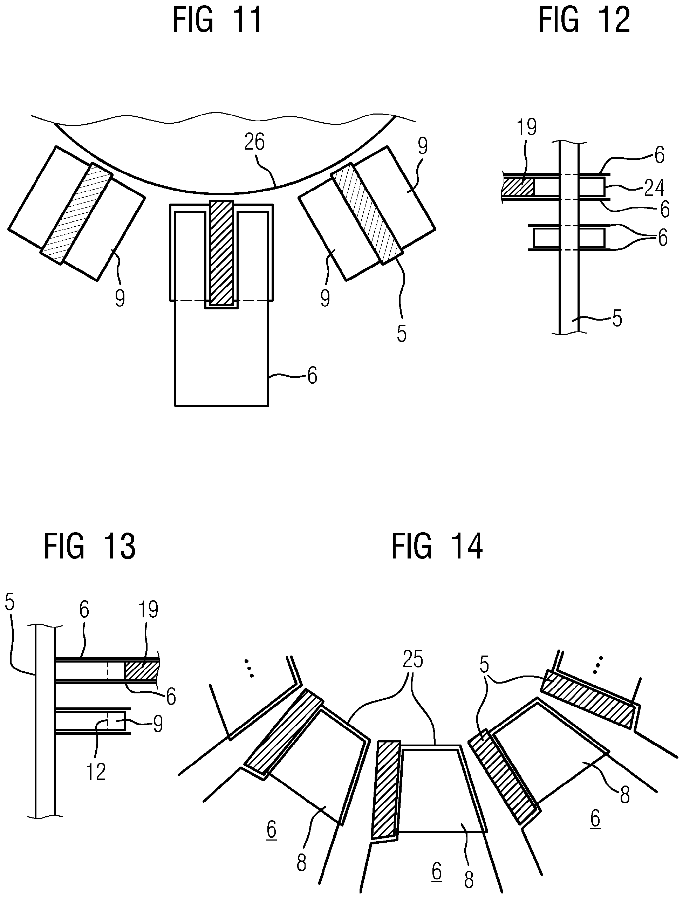

In weiteren Ausführungen sind die Kontaktnocken 9 tangential auskragend, sie erstrecken sich also im Wesentlichen zwischen benachbarten Sammelschienen 5. Bei einer einseitig im Wesentlichen tangential auskragend Kontaktfläche 25 zwischen den Sammelschienen 5, gemäß FIG 13 und FIG 14, müssen die Anpressbacken 18 nicht isoliert sein und man mit einer Verschraubung auskommen.

Die Kontaktflächen 24 der Kontaktnocken 9 sind einer Ausführung nach FIG 11 und FIG 12 beidseitig auskragend. Die Kontaktfläche 8 einer zugehörigen Leistungselektronik-Platine des Wechselrichtermoduls 6 muss demnach geschlitzt sein und bei einer Kontaktierung mittels Verschraubung wären mindestens zwei Schrauben nötig. Des Weiteren müssten zwischen benachbarten Sammelschienen 5 angeordnete Anpressbacken 18 isoliert sein, da diese benachbarte Sammelschienen 5 unterschiedliche Potentiale aufweisen können.

Nachteilig an diesem Aufbau ist ggf. der Umstand einer weiteren Ausführung, dass auf einer Leistungshalbleiterplatine ggf. mehrere Endstufen für unterschiedliche Phasen implementiert und daher mit mehreren Sammelschienen 5 zu verbinden ist. Für den Fall von einseitig auskragenden Nockenflächen 25 ist die Verbindung mit zwei Phasen noch kein Problem, da die Platine dann in der Mitte nur eine Aussparung für eine Sammelschiene 5 aufweisen muss.

Möchte man mehrere elektrische Phasen mit einer Leistungshalbleiterplatine verbinden, müssen die Schlitze jedoch exakt zueinander ausgerichtet sein, im Extremfall sogar parallel verlaufen, sodass diese Platine aus einer Richtung auf mehrere Sammelschienen 5 (egal ob Rund- oder leicht verdreht angeordnete Rechteckstäbe) positioniert, insbesondere aufgeschoben werden kann. Damit können ggf. nicht alle Kontaktflächen 24 vollumfassend mit den Kontaktstellen 8 der Wechselrichtermodule 6 abgedeckt werden (da diese ja leicht verdreht sind, die Schlitze der Platinen aber parallel verlaufen müssen).

### Bezugszeichenliste

- 1: dynamoelektrische Maschine
- 2: Stator
- 3: Nuten
- 4: Leiterstab
- 5: Sammelschiene
- 6: Wechselrichtermodul
- 7: Wechselrichtersegment
- 8: Kontaktstelle Wechselrichtermodul
- 9: Kontaktnocke
- 10: Achse
- 11: Bauelemente des Wechselrichters
- 12: Verschraubungselement
- 13: Spannelement
- 14: Schlitz im Wechselrichtersegment
- 15: Pressvorrichtung
- 16: Spannvorrichtung
- 17: Keil
- 18: Anpressbacken
- 19: Kühlscheibe
- 20: Keilring
- 21: Keilflanken
- 22: Anpresskraft
- 23: Bereich ohne Krafteinwirkung
- 24: beidseitig auskragende Kontaktflächen
- 25: einseitig auskragende Kontaktfläche
- 26: Statorbohrung
- 27: Ringe
- 30: Luftspalt
- 31: Rotor
- 34: axialer Abstand
- 35: Hauptkontaktstelle
- 36: Verschraubung Hauptkontaktstelle

## Patentansprüche

1. Rotatorische dynamoelektrische Maschine (1) mit
- einem Stator (2), der als hohlzylindrischer magnetisch leitfähiger Körper mit einer Statorbohrung (26) aufgebaut ist, und der ein aus Leiterstäben (4) in Nuten (3) des magnetisch leitfähigen Körpers gebildetes, im Bereich der Innenmantels der Statorbohrung (26) angeordnetes Wicklungssystem aufweist,
- einem Rotor (31), der in der Statorbohrung (26) angeordnet ist, wobei Stator (2) und Rotor (31) durch einen Luftspalt (30) voneinander getrennt sind,
- wobei die auf einer Stirnseite des magnetisch leitfähigen Körpers des Stators (2) aus jeweils einer Nut (3) ragenden erste Enden der Leiterstäbe (4) jeweils mit zumindest einer Sammelschiene (5) niederohmig elektrisch kontaktiert sind,
- wobei die Sammelschiene (5) mindestens einen Kontaktnocken (9) aufweist, um mittels eines Kontaktierungsmittels eine elektrische Kontaktierung zwischen dem Kontaktnocken (9) und einem dazugehörigen Wechselrichtermodul (6) zu schaffen,
- wobei die zweiten Enden der Leiterstäbe (4) an der anderen Stirnseite des magnetisch leitfähigen Körpers des Stators (2) zu einem Kurzschlussring zusammengefasst sind.

2. Rotatorische dynamoelektrische Maschine (1) nach Anspruch 1, **dadurch gekennzeichnet, dass** sich die Kontaktnocken (9) im Wesentlichen senkrecht zur Sammelschiene (5) erstrecken.

3. Rotatorische dynamoelektrische Maschine (1) nach Anspruch 1 oder 2, **dadurch gekennzeichnet, dass** die Kontaktnocken (9) eine Vorzugsrichtung aufweisen, die den Bauraum der Statorbohrung (26) ausspart, sofern die Sammelschiene (5) in axialer Verlängerung ihres Leiterstabes (4) angeordnet ist.

4. Rotatorische dynamoelektrische Maschine (1) nach einem der vorhergehenden Ansprüche, **dadurch gekennzeichnet, dass** die Kontaktnocken (9) der Sammelschiene (5) in axial vorgegebenen Abständen (34) voneinander auf der Sammelschiene (5) angeordnet sind.

5. Rotatorische dynamoelektrische Maschine (1) nach Anspruch 4, **dadurch gekennzeichnet, dass** die Kontaktnocken (9) der Sammelschiene (5) in äquidistanten axialen Abständen (34) voneinander auf der Sammelschiene (5) angeordnet sind.

6. Rotatorische dynamoelektrische Maschine (1) nach einem der vorhergehenden Ansprüche, **dadurch gekennzeichnet, dass** als niederohmiges Kontaktierungsmittel von Kontaktnocken (9) und WR-Modul (6) eine Verschraubung (12) und/oder eine Verpressung (15) und/oder eine Verspannung (16) vorgesehen ist.

7. Rotatorische dynamoelektrische Maschine (1) nach einem der vorhergehenden Ansprüche, **dadurch gekennzeichnet, dass** der Leiterstab (4) einstückig ausgeführt ist

8. Rotatorische dynamoelektrische Maschine (1) nach einem der vorhergehenden Ansprüche 1 bis 6, **dadurch gekennzeichnet, dass** der Leiterstab (4) aus Teilleitern aufgebaut ist, wobei insbesondere die Teilleiter jeweils eines Leiterstabes (4) in seiner Nut (3) verröbelt sind.

9. Rotatorische dynamoelektrische Maschine (1) nach einem der vorhergehenden Ansprüche, **dadurch gekennzeichnet, dass** zwischen zwei oder mehreren axial hintereinander angeordneten Wechselrichtermodulen (6) Kühlscheiben (19) zwischen den Wechselrichtermodulen (6) vorgesehen sind, die zumindest abschnittsweise in wärmeleitendem Kontakt mit den benachbarten Wechselrichtermodulen (6) stehen.
